# EUROPÄISCHE PATENTANMELDUNG

(11) **EP 2 487 626 A1**
(43) Veröffentlichungstag der Anmeldung: **15.08.2012**
(21) Anmeldenummer: 12154758.2
(22) Anmeldetag: 09.02.2012
(51) Int. Cl.: G06K 19/077, B32B 38/06, B42D 15/10

(54) **Verfahren zur Herstellung eines Laminats**

(30) Priorität: 11.02.2011 DE 102011011051
(71) Anmelder: OVD Kinegram AG, 6301 Zug (CH)
(72) Erfinder: Peters, John Anthony, 8804 Au - Zürich (CH); Holliger, Daniel, 6340 Baar (CH)
(74) Vertreter: Zinsinger, Norbert

(57) **Zusammenfassung**

Die Erfindung betrifft ein Verfahren zur Herstellung eines Laminats (22) mit einem musterförmigen Oberflächenrelief, und einen aus einem Laminat (22) gebildeten Kartenkörper. Das Verfahren umfasst folgende Schritte:
Bereitstellen eines Polymersubstrats (4) mit einem ersten
Wärmeausdehnungskoeffizienten und eines zweiten Materials mit einem zweiten Wärmeausdehnungskoeffizienten. Dabei unterscheiden sich der erste und der zweite Wärmeausdehnungskoeffizient bei einer Temperatur von 20°C um mindestens 15 x 10⁻⁶ K⁻¹.
Anordnen einer aus dem zweiten Material gebildeten Musterschicht (6) auf mindestens einer Seite des Polymersubstrats (4), so dass die Musterschicht (6) senkrecht zur Substratebene gesehen ein Muster ausbildet.
Pressen eines Schichtstapels (2) in einem Laminier-Prozess bei einer Temperatur von 120°C bis 220°C zu einem Laminat (22). Der Schichtstapel umfasst das Polymersubstrat (4) und die Musterschicht (6). Die gegenüberliegenden Seiten des Schichtstapels (2) werden eben ausgebildet.
Abkühlen des Laminats (22) auf eine Temperatur von 30°C bis 10°C. Aufgrund der unterschiedlichen Wärmeausdehnungskoeffizienten des Polymersubstrats (4) und der Musterschicht (6) an mindestens einer Oberfläche des Laminats (22) senkrecht zur Ebene des Laminats (22) gesehen bildet sich das entsprechend dem Muster geformte Oberflächenrelief aus.

## Beschreibung

Die Erfindung betrifft ein Verfahren zur Herstellung eines Laminats und einen aus einem Laminat gebildeten Kartenkörper.

Debit- und Kreditkarten, die aus einem Schichtstapel von miteinander laminierten einzelnen Schichten wie z. B. Kunststofffolien, hergestellt werden, sind seit längerem bekannt. Auch für Identifikations-Dokumente wie Reisepässe, Personalausweise, Führerscheine oder Visa, die bisher ausschließlich in Papierform vorlagen, findet dieser Schichtaufbau zunehmend Verwendung, da er eine verbesserte Fälschungssicherheit, Haltbarkeit und Funktionalität erlaubt.

Der Erfindung liegt die Aufgabe zugrunde, ein verbessertes Verfahren zur Herstellung eines Laminats sowie einen verbesserten Kartenkörper anzugeben.

Die Aufgabe wird gelöst durch ein Verfahren nach Anspruch 1, sowie einen Kartenkörper nach Anspruch 11.

Der Erfindung liegt die Idee zugrunde, in einem Schichtstapel mit mehreren Schichten eine musterförmig ausgebildete Schicht aus einem Material vorzusehen, dessen Wärmeausdehnungskoeffizient sich von dem Wärmeausdehnungskoeffizient der Materialien, aus denen andere Schichten des Schichtstapels bestehen, wesentlich unterscheidet. Um die einzelnen Schichten praktisch untrennbar miteinander zu verbinden, wird der Schichtstapel Druck und Wärme ausgesetzt und so zu einem Laminat geformt. Dieser Vorgang ist als Laminieren bekannt, wobei die Verbindung zwischen einzelnen Schichten insbesondere durch ein Verschmelzen benachbarter Schichten auch mittels Klebstoff erzielt werden kann, der zwischen allen oder einigen der Schichten *als* partielle oder vollflächige Zwischenschicht vorhanden sein kann. Wenn nach dem Pressvorgang das Laminat abkühlt, z. B. auf Umgebungstemperatur, kontrahieren die unterschiedlichen Materialien des Schichtstapels entsprechend ihrem Wärmeausdehnungskoeffizienten unterschiedlich stark.

Da sich das Material der musterförmigen Schicht schwächer oder stärker zusammenzieht als das Material umgebender Schichten, bildet sich während des Abkühlens an einer Oberfläche des abkühlenden Laminats ein Oberflächenrelief immer stärker aus; das Muster der musterförmigen Schicht schlägt sozusagen bis an die Oberfläche des Laminats durch. Die Schichtdicken, Materialien und andere Eigenschaften der einzelnen Schichten des Schichtstapels werden nun so gewählt, dass die Modulationstiefe des Oberflächenreliefs nach vollständiger Abkühlung in einem Bereich liegt, in dem das Oberflächenrelief visuell und/oder taktil wahrnehmbar ist.

Vorzugsweise wird ein Muster gewählt, das in einem Kartenkörper, der aus einem derartigen Laminat gebildet ist, ein Sicherheitsmerkmal, eine Information oder einen Schutzwulst für Sicherheitsmerkmale des Kartenkörpers oder für auf dem Kartenkörper angeordnete Datenelemente bereitstellt. Dabei kann das Muster in positiver oder negativer Darstellung ausgebildet sein.

Die für den erfindungsgemäßen Effekt mindestens notwendige Differenz des ersten und des zweiten Wärmeausdehnungskoeffizienten ist abhängig von verschiedenen Parametern des Schichtstapels und des Verfahrens. Beispielsweise handelt es sich bei dem Polymersubstrat um Polycarbonat (= PC) und bei dem zweiten Material um Kupfer, so dass der erste Wärmeausdehnungskoeffizient bei einer Temperatur von 20°C um ca. 54 x 10⁻⁶ K⁻¹ größer als der zweite Wärmeausdehnungskoeffizient ist. Es hat sich gezeigt, dass eine Differenz zwischen dem ersten und dem zweiten Wärmeausdehnungskoeffizienten von mindestens 15 x 10⁻⁶ K⁻¹ besonders vorteilhaft ist.

Handelt es sich bei dem ersten Material, das zum Ausbilden der Musterschicht dient, um einen Stoff, dessen Extinktionskoeffizient sich von dem der Materialien der umgebenden Schichten, unterscheidet, so kann ein erfindungsgemäßes Oberflächenrelief durch elektromagnetische Strahlung in einfacher und verlässlicher Weise von einem herkömmlichen Oberflächenrelief unterschieden werden, das in einem Schichtstapel während des Laminierens durch Aufpressen eines reliefierten Pressblechs erzeugt wurde. Zum Beispiel ist eine metallische Musterschicht, die von polymeren Schichten umgeben ist, im Durchlicht, vorzugsweise mit visuellem Licht, zu erkennen, da sie (vollständig) lichtundurchlässig ist, während Kunststoff einen bestimmten Anteil des Lichts transmittiert. Wurde ein Laminat mittels des erfindungsgemäßen Verfahrens hergestellt, folgt die Kontur des Oberflächenreliefs dem Umriss der Musterschicht. Falls dagegen ein Oberflächenrelief nicht mittels des erfindungsgemäßen Verfahrens hergestellt wurde, liegt entweder keine Musterschicht vor oder die Musterschicht liegt nicht an derselben Position wie das Oberflächenrelief.

Eine Musterschicht kann auf einer Seite oder auf beiden Seiten des Polymersubstrats angeordnet werden. Im letzteren Fall kann es sich a) um übereinander liegende identische Muster, b) sich zu einem Gesamtmuster ergänzende Teilmuster oder c) verschiedene Muster handeln. Im Fall a) verstärkt sich die Wirkung der auf beiden Seiten des Polymersubstrats angeordneten Musterschichten zu einem Oberflächenrelief mit besonders großer Modulationstiefe. Im Fall b) ist das aus den einzelnen Musterschichten gebildete Gesamtmuster bei Durchstrahlung des Laminats, d. h. im Durchlicht zu erkennen. Im Fall c) ist auf jeder Seite des Laminats ein unterschiedliches Oberflächenrelief wahrnehmbar.

Das Pressen des Schichtstapels kann in einer herkömmlichen Laminiervorrichtung erfolgen, wobei keine reliefierten Pressbleche, sondern ebene Pressbleche ohne Oberflächenrelief verwendet werden. Das Pressen des Schichtstapels kann auch in einer Laminiervorrichtung erfolgen, wobei die Pressbleche mikroskopische und/oder makroskopische Reliefs, nebeneinander und/oder überlagernd, aufweisen. Es ist möglich, dass zwischen den einzelnen Schichten des Schichtstapels ein Kleber wie beispielsweise ein Heißkleber vorgesehen ist. Der Kleber kann auch zumindest teilweise vernetzende Bestandteile aufweisen, die durch Hitze und/oder Strahlung aktivierbar sind. Die Laminierung findet vorzugsweise unter einem Druck in einem Bereich von 140 kN/cm² bis 450 kN/cm² und einer Temperatur in einem Bereich von 120°C bis 220°C, vorzugsweise 170°C bis 200°C, besonders bevorzugt 180°C bis 190°C, statt. Beim Pressen wird das Polymersubstrat so weich (0,05 x 10⁻⁵ mPas bis 1,5 x 10⁻⁵ mPas), dass sich die Musterschicht in das Polymersubstrat einpressen kann. Der Pressvorgang wird solange fortgesetzt, bis beide Seiten des Schichtstapels eben sind. Der Pressvorgang weist dabei eine Presszeit (Heißpressen) bei gleichzeitigem Erhitzen des Schichtstapels statt, wobei bevorzugt bei einer Temperatur zwischen 180°C und 220°C ein Press-Druck auf den Schichtstapel einwirkt von vorzugsweise 140 kN/cm² bis etwa 220 kN/cm².

Vorzugsweise folgt sodann ein Kaltpressen. Bei einer Presszeit während des Abkühlens des Schichtstapels ohne zusätzliche Erhitzung des Schichtstapels wirkt ein Press-Druck von bevorzugt 350 kN/cm² bis etwa 450 kN/cm² auf den Schichtstapel ein, während dieser von 180°C bis 220°C auf Umgebungstemperatur (30°C bis 10°C) abkühlt. Durch dieses Kaltpressen wird erreicht, dass sich der Schichtstapel beim Abkühlen nicht unkontrolliert verformen kann.

Das Abkühlen des Laminats nach dem Laminieren kann durch natürliche Wärmeabgabe an die Umgebung (Abkühldauer etwa 30 bis 60 min.) oder durch aktive Kühlung (Abkühldauer etwa 5 bis 10 min.) erfolgen. In der Regel wird das Laminat bis auf Umgebungstemperatur (30°C bis 10°C) abgekühlt. Das abgekühlte Laminat weist auf mindestens einer seiner beiden ebenen Seitenflächen ein musterförmiges Oberflächenrelief auf.

Ein erfindungsgemäßer Kartenkörper ist aus einem Laminat gebildet, das vorzugsweise mit einem erfindungsgemäßen Verfahren hergestellt wurde. Aus dem Laminat können Karten vorgegebener Größe, z. B. ID-1 oder ID-3 nach ISO 7816, geschnitten oder gestanzt werden, die nach ihrer Individualisierung, z. B. durch Bedrucken mit oder Eingravieren von nutzerspezifischen Daten wie Name, Kontonummer oder Gültigkeitszeitraum, als Servicekarten wie Debitkarten oder Kreditkarten verwendet werden. In einem auf geeignete Größe gebrachten Laminat kann auch eine Kavität ausgebildet und darin ein elektronisches Bauteil wie ein Mikrochip oder ein RFID-Chip eingesetzt werden. Der Kartenkörper kann auch ein Koppelelement wie eine Antenne aufweisen. Das Koppelelement kann in das Laminat eingebettet sein, beispielsweise durch Anordnung des Koppelelements zwischen zwei Schichten des Schichtstapels vor dem Laminieren. Auch kann ein individualisiertes Laminat mit einer Schutzschicht beschichtet werden.

Es ist möglich, dass auf dem Laminat weitere Sicherheitselemente wie OVDs angeordnet werden (OVD = Optically Variable Device). Derartige Sicherheitselemente können z.B. OVIs (OVI = Optically Variable Inks), d.h. optisch variable Druckfarben oder Drucktinten sein oder ein Volumenhologramm oder ein Schichtsystem, welches ein Dünnfilmschichtsystem ausbildet, welches durch Interferenz Farbverschiebungseffekte generiert, oder ein oder mehrere Flüssigkristallschichten, insbesondere auch cholesterische Flüssigkristallschichten, welche einen blickwinkelabhängigen Farbverschiebungseffekt zeigen oder eine in einer Lackschicht abgeformten Struktur, beispielsweise einem Hologramm mit einer die Sichtbarkeit der Struktur erhöhenden Reflexionsschicht aus Metall oder einem Material mit einem zu der Lackschicht unterschiedlichen Brechungsindex, vorzugsweise LRI- oder HRI-Materialien (LRI = Low Refractive Index, HRI = High Refractive Index) mit besonders hohen oder besonders niedrigen Brechungsindizes. Die abgeformte Struktur weist bevorzugt ein oder mehrere Reliefstrukturen ausgewählt aus der Gruppe diffraktives Gitter, Hologramm, Blazegitter, Lineargitter, Kreuzgitter, Hexagonalgitter, asymmetrische oder symmetrische Gitterstruktur, retroreflektierende Struktur, Mikrolinse, Mikroprisma, Beugungsstruktur nullter Ordnung, Mottenaugenstruktur oder anisotrope oder isotrope Mattstruktur auf. Weiter kann diese abgeformte Struktur eine additive oder subtraktive Überlagerung von zwei oder mehreren der oben genannten Reliefstrukturen umfassen. Unter einem diffraktiven Gitter wird eine Reliefstruktur mit einer Spatialfrequenz von 100 bis 5000 Linien/mm verstanden, deren Strukturelemente bevorzugt eine Strukturtiefe zwischen 0,1 und 20 µm, insbesondere zwischen 0,1 und 10 µm aufweisen. Als Blazegitter werden bevorzugt Reliefstrukturen mit dreieckförmigen Strukturelementen eingesetzt, welche voneinander zwischen 0,2 und 10 µm beabstandet angeordnet sind. Als Mikrolinsen werden bevorzugt Zylinderlinsen oder sphärische Linsen mit einer Brennweite von 5 bis 500 µm und/oder einer Strukturtiefe von 0,1 bis 50 µm eingesetzt. Als Mikroprismen werden bevorzugt Mikroprismen eingesetzt, welche eine Strukturtiefe von 0,1 bis 25 µm besitzen, eine Strukturbreite an der Basis von 5 bis 300 µm aufweisen und voneinander bevorzugt zwischen 5 und 300 µm beabstandet sind. Als Mattstrukturen werden bevorzugt Mattstrukturen mit einer Korellationslänge zwischen 0,2 und 20 µm eingesetzt. Als Beugungsstrukturen nullter Ordnung werden bevorzugt regelmäßige Strukturen mit einer Spatialfrequenz von mehr als 2000 Linien/mm eingesetzt.

Es ist auch möglich, dass der Schichtstapel bereits vor dem Laminieren eine oder mehrere Schichten mit nutzerspezifische Daten und/oder weiteren Sicherheitsmerkmalen umfasst, so dass eine weitere Individualisierung oder Absicherung des Laminats nicht nötig ist und das auf eine geeignete Größe gebrachte Laminat direkt als Kartenkörper genutzt werden kann. Auch diese vorgenannten nutzerspezifischen Daten können eines oder mehrere der oben genannten Sicherheitselemente aufweisen.

Vorteilhafte Ausgestaltungen der Erfindung sind in den Unteransprüchen bezeichnet.

Die Modulationstiefe eines erfindungsgemäßen Oberflächenreliefs ist unter anderem abhängig von der Differenz des ersten und des zweiten Wärmeausdehnungskoeffizienten, den Schichtdicken der Musterschicht und der die Musterschicht überdeckenden Schichten des Schichtstapels, der Ausdehnung der einzelnen Elemente der Musterschicht (Linienbreite, Buchstabengröße, Punktdurchmesser, etc.) entlang der Schichtebene und den Parametern des Laminier-Prozesses. Typische Oberflächenreliefs haben eine Modulationstiefe im Bereich von 3 bis 30 µm. Je nach Ebenheit und Glanzgrad der Oberfläche, in dem sich das Oberflächenrelief ausbildet, sind für eine gewünschte Wahrnehmbarkeit des Oberflächenreliefs unterschiedliche Reliefparameter erforderlich.

Es ist möglich, dass eine Deckschicht auf einer dem Polymersubstrat abgewandten Seite der Musterschicht angeordnet wird bevor der Schichtstapel, der das Polymersubstrat, die Musterschicht und die Deckschicht umfasst, gepresst wird. Das entsprechend dem Muster geformte Oberflächenrelief bildet sich somit zumindest in einer durch die Deckschicht gebildeten Oberfläche des Laminats aus. Ein Kartenkörper, der aus einem derartigen Laminat gebildet ist, weist daher an seiner Vorder- und/oder Rückseite ein Oberflächenrelief auf.

Es ist bevorzugt, dass die Deckschicht einen dritten Wärmeausdehnungskoeffizienten ausweist, wobei sich der zweite und der dritte Wärmeausdehnungskoeffizient bei einer Temperatur von 20°C um mindestens 15 x 10⁻⁶ K⁻¹ unterscheiden. Es ist möglich, dass die Deckschicht aus demselben Material wie das Polymersubstrat besteht, insbesondere aus Polycarbonat. Es ist auch möglich, dass die Deckschicht aus Polyethylen oder ABS PVC, PET-G, PET-F, PU, TPU, Teslin besteht.

Es ist möglich, dass das zweite Material einen anorganischen Stoff aufweist, vorzugsweise ein Metall. Als besonders geeignet hat sich Kupfer erwiesen. Es ist aber auch möglich, dass andere Metall wie Aluminium, Eisen, Chrom, Silber, Titan oder Legierungen aus diesen Metallen verwendet werden. Als zweites Material können auch druckbare Stoffe eingesetzt werden, insbesondere elektrisch leitfähige Tinten oder mit Metallpigmenten versetzte Farben.

Es ist bevorzugt, dass das Polymersubstrat eine Kunststofffolie, insbesondere aus PC, PET oder PVC mit einer Foliendicke von weniger als 300 µm ist. Vorzugsweise liegt die Foliendicke in einem Bereich von 25 bis 150 µm.

Es ist möglich, dass die Musterschicht eine Schichtdicke von mehr als 2 µm, vorzugsweise von mehr als 5 µm aufweist. Es ist weiter möglich, dass ein Element der Musterschicht, welches das Muster ausbildet, mit einer Breite von mindestens 100 µm ausgebildet wird, in der Substratebene gemessen. Es ist weiter möglich, dass benachbarte Elemente der Musterschicht, welche das Muster ausbilden, mit einem Abstand von mindestens 300 µm auf dem Polymersubstrat ausgebildet werden, in der Substratebene gemessen. Es hat sich als vorteilhaft gezeigt, dass bei einer hochpolierten Kartenoberfläche und bei einer Schichtdicke der Musterschicht im Bereich von 5 µm sowie einer Dicke des Kartenkörpers im Bereich von 800 µm die minimale Breite / Länge ca. 100 µm und der minimale Abstand zwischen zwei Elementen der Musterschicht ca. 500 µm beträgt, weil sich auf diese Weise die beiden Elemente als auf der Oberfläche des Kartenkörpers als getrennte Elemente des Oberflächenreliefs abzeichnen.

Es ist bevorzugt, wenn das Muster der Musterschicht eine geometrische Form, ein Schriftzug, ein Symbol, ein Logo, ein Umriss oder eine Grafik ist. Das durch das Muster hervorgerufene Oberflächenrelief kann als zusätzliches Sicherheitsmerkmal des Datenkörpers dienen.

Es ist bevorzugt, wenn die Musterschicht auf dem Polymersubstrat folgende Schritte umfasst: Zunächst wird eine elektrisch leitfähige Seedlayer-Schicht auf dem Polymersubstrat aufgebracht, sodass die Seedlayer-Schicht senkrecht zur Substratebene gesehen das Muster ausbildet. In einem nachfolgenden Schritt wird in einem galvanischen Abscheideprozess eine metallische Verstärkungsschicht auf der musterförmigen Seedlayer-Schicht ausgebildet. Nach Abschluss des galvanischen Abscheideprozesses bildet die so verstärkte Seedlayer-Schicht die Musterschicht aus. Mit herkömmlichem Rolle-zu-Rolle-Verfahren kann in einem Durchlauf eine Verstärkungsschicht mit einer Schichtdicke im Bereich von 1 bis 2 µm ausgebildet werden. Um größere Schichtdicken zu erreichen, können mehrere galvanische Abscheidungsvorrichtungen hintereinander durchlaufen werden, sodass die resultierende Schichtdicke der Musterschicht theoretisch beliebig dick ausgebildet werden kann, vorzugsweise im Bereich von 3 bis 20 µm.

Vorzugsweise weist das Oberflächenrelief senkrecht zur Ebene des Kartenkörpers gemessen eine Modulationstiefe von höchstens 30 µm auf. Weiter ist es bevorzugt, wenn die Modulationstiefe im Bereich von 3 bis 30 µm liegt. Damit ist die Modulationstiefe des erfindungsgemäßen Oberflächenreliefs wesentlich kleiner als ein Oberflächenrelief, das durch ein geformtes Pressblech, welches ein grafisches Symbol eingraviert hat oder eine Gravur für andere Zwecke, z. B. eindimensionales oder zweidimensionales Moiré-Muster trägt, gebildet wurde. Zudem ist ein erfindungsgemäßes Oberflächenrelief, wie bereits oben ausgeführt wurde, gegenüber einem herkömmlich mit einem Pressblech erzeugten Oberflächenrelief durch eine Durchleuchtung des Kartenkörpers einfach zu unterscheiden, wobei bei dieser Durchleuchtung die lagegenaue Übereinstimmung des Oberflächenreliefs mit der Musterschicht kontrolliert werden kann.

Es ist möglich, dass das Oberflächenrelief senkrecht zur Ebene des Kartenkörpers gemessen andere Oberflächenstrukturen des Kartenkörpers, wie an der Oberfläche des Kartenkörpers angeordnete Sicherheitselemente, überragt. So kann das erfindungsgemäße Oberflächenrelief einen Schutzwulst zum Schutz eines an der Oberfläche des Kartenkörpers angeordneten Elements bilden. Dadurch wird ein Ablösen oder ein Verkratzen oder eine sonstige Beschädigung eines Oberflächenelements reduziert oder gänzlich verhindert.

Falls das Oberflächenrelief einen Schutzwulst bildet, kann es Schutz gegen Drucklasten z. B. um in den Kartenkörper eingebettete Chips herum oder um maschinenlesbare optische Strukturen/Informationen zur Erhaltung deren Informationsgehalt, d. h. Schutz gegen Verkratzen, bilden. Bei derartigen Oberflächenelementen kann es sich um einen ein- oder zweidimensionalen Barcode, z.B. einen QR-Code handeln oder um einen Kinecode, ein Secure-Memory-Code oder einen Secure-Linear-Code handeln. Der Schutzwulst kann aber auch taktile Informationen an der Oberfläche des Kartenkörpers vor Beschädigung schützen, beispielsweise hochgeprägte oder mittels Intaglio-Druck aufgebrachte Symbole, Nummern, Buchstaben oder auch Elemente einer Blindenschrift.

Es ist möglich, dass der Kartenkörper eine von der Musterschicht beabstandet angeordnete Antennenstruktur aufweist. Kartenkörper, die als Wertdokumente wie z. B. als ein Ausweisdokument genutzt werden, können einen RFID-Transponder mit einer Antennenstruktur aufweisen. Es ist möglich, dass die Musterschicht eine derartige Antennenstruktur nicht beeinflusst, insbesondere beabstandet von ihr angeordnet ist.

Es ist möglich, dass senkrecht zur Ebene des Kartenkörpers gemessen die Schichtdicke der Musterschicht größer als die Schichtdicke der Antennenstruktur ist.

Es ist weiter möglich, dass das Oberflächenrelief visuell und/oder taktil wahrnehmbar ist. So kann beim Überstreichen der Oberfläche des Kartenkörpers mit den Fingern das Oberflächenrelief wahrgenommen werden. Es ist auch möglich, dass unter einem bestimmten Blickwinkel das Oberflächenrelief einem Betrachter klar erkennbar ist.

Gemäß eines bevorzugten Ausführungsbeispiels der Erfindung beeinflusst die Musterschicht eine elektromagnetische Wirkung eines elektrischen Elements des Kartenkörpers, insbesondere einer Antennenstruktur, und/oder beeinflusst das Oberflächenrelief eine optische Wirkung eines optischen Sicherheitselements des Kartenkörpers.

Vorzugsweise wird zur Beeinflussung der optischen Wirkung des Kartenkörpers das Oberflächenrelief in einer transparenten oberen Lage eines Kartenkörpers ausgebildet. Das Oberflächenrelief wird hierbei bevorzugt so ausgebildet, dass es einen optischen, beispielsweise diffraktiven, Effekt im sichtbaren Bereich erzeugt und/oder verändert. Bezüglich der hierfür einsetzbaren Reliefstrukturen wird auf die obigen Ausführungen verwiesen. Die abgeformte Struktur weist bevorzugt ein oder mehrere Reliefstrukturen ausgewählt aus der Gruppe diffraktives Gitter, Hologramm, Blazegitter, Lineargitter, Kreuzgitter, Hexagonalgitter, asymmetrische oder symmetrische Gitterstruktur, retroreflektierende Struktur, Mikrolinse, Mikroprisma, Beugungsstruktur nullter Ordnung, Mottenaugenstruktur oder anisotrope oder isotrope Mattstruktur auf. Eine Veränderung des optischen Effekts kann- zum Beispiel durch lokale Veränderung des blickwinkelabhängigen diffraktiven Effekts in den erhabenen und/oder nicht erhabenen Bereichen des Oberflächenreliefs oder in den geneigten Übergängen zwischen den erhabenen und den nicht erhabenen Bereichen bewirkt werden.

Es ist ebenso möglich, dass das Oberflächenrelief anders ausgebildete OVDs oder OVIs in ihrer optischen Wirkung verändert. Zum Beispiel kann eine zumindest bereichsweise auf das Oberflächenrelief aufgebrachte Volumenhologrammschicht bereichsweise so verformt sein, dass deren blickwinkelabhängige optische Effekte verändert sind. Geschieht dies in Kombination mit einem in dem Volumenhologramm eingeschriebenen grafischen Design (beispielsweise Symbole, Buchstaben, Ziffern, Logos etc.) und ist das Oberflächenrelief zu diesem Design weitgehend lagegenau, d.h. im Register dazu angeordnet, können überraschende und anderweitig nur schwer erzielbare optische Effekte, wie lokale Farb- und/oder Blickwinkelverschiebungen erzeugt werden.

In ähnlicher Weise lassen sich durch lokale Verformung und/oder lokale Schichtdickenveränderung OVIs (OVI = Optically Variable Inks), d.h. optisch variable Druckfarben oder Drucktinten oder Dünnfilmschichtsysteme, welche durch Interferenz Farbverschiebungseffekte generieren, oder ein oder mehrere Flüssigkristallschichten, insbesondere auch cholesterische Flüssigkristallschichten, welche einen blickwinkelabhängigen Farbverschiebungseffekt zeigen, in ihren optisch variablen Eigenschaften lokal verändern, sodass zum Beispiel in den erhabenen Bereichen des Oberflächenreliefs andere Farbeffekte vorliegen als in den nicht erhabenen Bereichen. Insbesondere in Kombination mit einem grafischen Design, beispielsweise Symbole, Buchstaben, Ziffern, Logos etc. in dem OVD oder OVI sind hier schwer nachahmbare Effekte erzielbar.

Es ist auch möglich, dass das Oberflächenrelief mit einer diffraktiven Oberfläche des Sicherheitselements kombiniert ist. Es ist auch möglich, dass die Musterschicht als eine metallische Schicht ausgebildet ist, die die elektrische Charakteristik einer Antennenstruktur, die in dem Kartenkörper angeordnet ist, beeinflusst. Es ist ebenso möglich, dass oberhalb der Musterschicht eine transparente Kunststoffschicht angeordnet ist, wobei diese Schicht über ihre Fläche vollständig transparent oder transparent eingefärbt ist oder aber nur einen transparenten oder transparent eingefärbten Teilflächenbereich, beispielsweise ein Fenster, aufweist. Durch dieses Fenster hindurch kann die beispielsweise metallische Musterschicht sichtbar sein, in deren Oberfläche ein beispielsweise diffraktives Oberflächenrelief eingeprägt ist.

Befindet sich das Oberflächenrelief nun teilweise im Flächenbereich des Fensters, kann das Oberflächenrelief den diffraktiven Effekt der Musterschicht beeinflussen, beispielsweise durch Ausbildung eines makroskopischen linsenartigen Effekts durch Aufwölbung der transparenten Kunststoffschicht.

Weiter wird das Oberflächenrelief in der metallischen Musterschicht bevorzugt dazu verwendet, die elektrischen Eigenschaften der metallischen Musterschicht zu beeinflussen. Vorzugsweise wird die Metallschicht oder zwei in unterschiedlichen Ebenen angeordnete Metallschichten wie im Dokument WO 2005/010809 A1 beschrieben durch ein Oberflächenrelief beeinflusst und bezüglich der Ausgestaltung des Oberflächenreliefs oder der Oberflächenreliefe (bei zwei oder mehr Metallschichten) wird auf die diesbezüglichen Ausführungen in der WO 2005/010809 A1 verwiesen.

Das transparente Fenster kann durch den gesamten Schichtstapel hindurchgehen, wenn der gesamte Schichtstapel, abgesehen von der Musterschicht, zumindest im Bereich des Fensters aus transparenten Materialien besteht.

Besonders bevorzugt ist es, wenn der Kartenkörper als ein Wertdokument, insbesondere eine Ausweiskarte, eine Bankkarte oder eine Service-Karte, ausgebildet ist.

Im Folgenden wird die Erfindung anhand mehrerer Ausführungsbeispiele unter Zuhilfenahme der beiliegenden Zeichnungen erläutert:
Figur 1 zeigt einen herkömmlichen Kartenkörper;
Figur 2 zeigt ein erstes Ausführungsbeispiel eines erfindungsgemäßen Kartenkörpers;
Figur 3 zeigt ein weiteres Ausführungsbeispiel eines erfindungsgemäßen Kartenkörpers;
Figur 4 zeigt einen Schnitt durch ein erstes Ausführungsbeispiel eines Schichtstapels;
Figur 5 zeigt einen Schnitt durch ein weiteres Ausführungsbeispiel eines Schichtstapels;
Figur 6 zeigt einen Schnitt durch einen Schichtstapel während des Laminierprozesses;
Figur 7 zeigt einen Schnitt durch einen erfindungsgemäßen Kartenkörper;
Figur 8 zeigt ein weiteres Ausführungsbeispiel eines Schichtstapels;
Figur 9 zeigt einen Schnitt durch ein weiteres Ausführungsbeispiel eines erfindungsgemäßen Kartenkörpers;
Figur 10 zeigt ein Ausführungsbeispiel, in dem das Oberflächenrelief einen Schutzwulst bildet; und
Figur 11 zeigt ein schematisches Diagramm eines Temperatur- und Druckprofils im Zeitverlauf während eines Laminiervorgangs

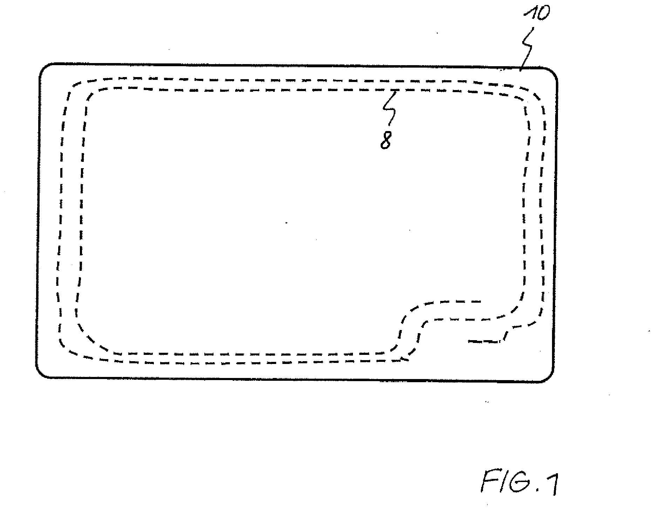

Figur 1 zeigt einen herkömmlich laminierten Kartenkörper 10, in dem eine, hier strichliniert angedeutete, Antennenstruktur 8 eingebettet ist. Dabei kann es sich beispielsweise um eine Antennenstruktur eines RFID-Transponders handeln. Derartige Kartenkörper werden beispielsweise als Ausweisdokumente eingesetzt.

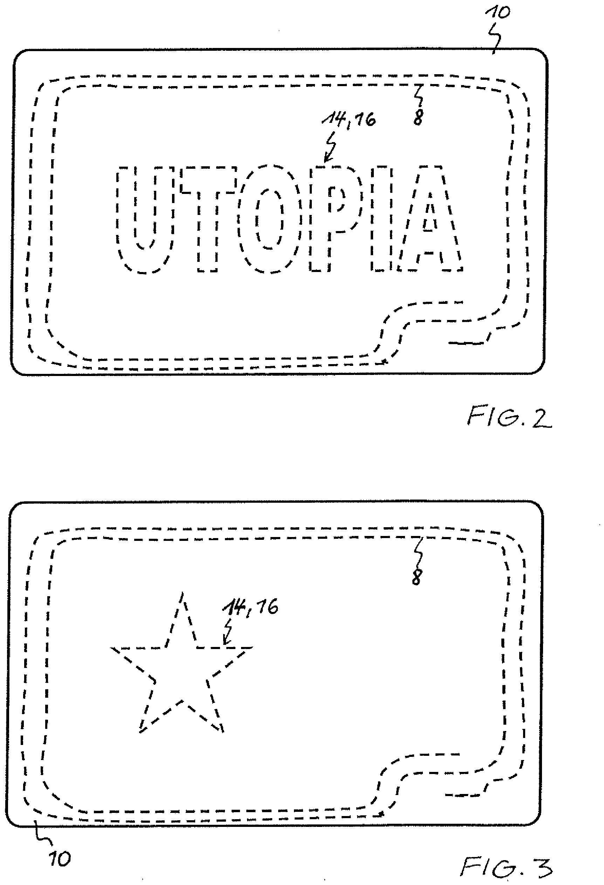

Figur 2 zeigt ein Ausführungsbeispiel eines Kartenkörpers, der ähnlich einem herkömmlichen Kartenkörper, wie in Figur 1 dargestellt, ausgebildet ist, aber zusätzlich dazu senkrecht zu der Ebene des Kartenkörpers 10 gesehen umschlossen von der Antennenspule 8 ein Oberflächenrelief 16 in Form eines Schriftzugs 14 "UTOPIA" aufweist.

Figur 3 zeigt ein weiteres Ausführungsbeispiel eines erfindungsgemäßen Kartenkörpers 10, der ähnlich wie das in Figur 1 dargestellte Kartenkörper 10 eine Antennenstruktur 8 aufweist, aber zusätzlich dazu senkrecht zu der Ebene des Kartenkörpers 10 gesehen umschlossen von der Antennenspule 8 ein Oberflächenrelief 16 in Form eines fünfzackigen Sterns 14 angeordnet ist.

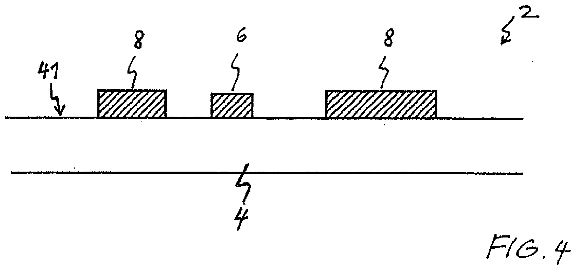

Figur 4 zeigt einen Schnitt durch einen Schichtstapel 2. Der Schichtstapel 2 umfasst ein Polymersubstrat 4 und eine darauf angeordnete Musterschicht 6. Zusätzlich zu der Musterschicht 6 ist auf derselben Seite 41 des Polymersubstrats 4 eine Antennenschicht zur Ausbildung einer Antennenstruktur 8 ausgebildet. Bei dem Polymersubstrat kann es sich um eine Polycarbonatfolie mit einer Schichtdicke von 25 bis 150 µm handeln. Die Musterschicht 6 kann als eine metallische Schicht, ebenso wie die Antennenstruktur 8, ausgebildet sein. Sie kann dadurch erzeugt werden, dass auf das Polymersubstrat 4 eine elektrisch leitfähige Seedlayer (= Keimschicht) aufgedruckt wird, in Form eines Musters, beispielsweise des Schriftzugs "UTOPIA" oder des Sterns 14, und in einem nachfolgenden Schritt, einem galvanischen Abscheideprozess, durch Abscheidung metallischen Materials auf dem Seedlayer verstärkt wird. Die so erzeugte Musterschicht 6 kann eine Schichtdicke im Bereich von 3 bis 30 µm aufweisen. Die benachbarten Antennenstrukturen 8 können in einem analogen oder auch in demselben Herstellungsverfahren wie die Musterschicht 6 ausgebildet werden.

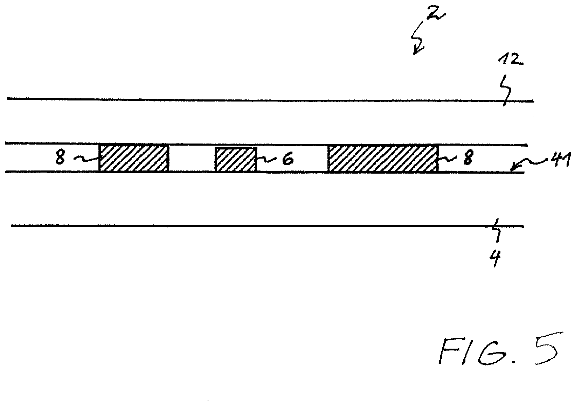

Figur 5 zeigt ein weiteres Ausführungsbeispiel eines Schichtstapels 2 bestehend aus einem Polymersubstrat 4 einer darauf auf einer ersten Seite 41 des Polymersubstrats 4 aufgebrachten Musterschicht 6 und benachbarten Antennenstruktur 8, sowie einer Deckschicht 12, die auf der von dem Polymersubstrat 4 abgewandten Seite der Musterschicht 6 und Antennenstruktur 8 aufgebracht ist. Die Deckschicht 12 ist identisch zu dem Polymersubstrat 4 als ein Kunststofffilm mit einer Schichtdicke im Bereich von 25 bis 150 µm ausgebildet. Als besonders geeignet hat sich dabei eine Polycarbonatfolie (PC) erwiesen.

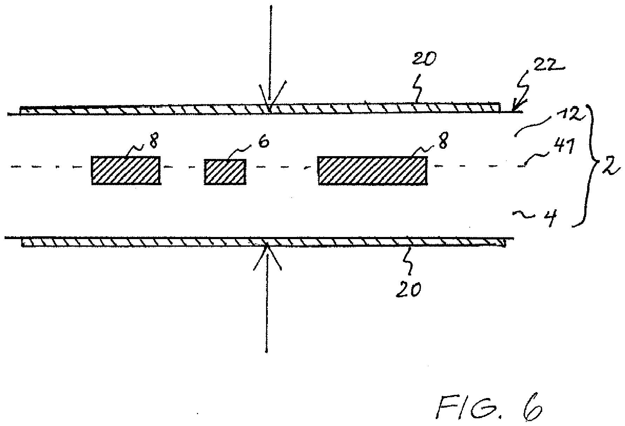

Figur 6 zeigt die in den in Figur 5 dargestellten Schichtstapel 2 in einem Pressvorgang. Ein Paar von Pressflächen 20 presst den Schichtstapel 2, der das Polymersubstrat, die Musterschicht 6 und die benachbart angeordnete Antennenstruktur 8 sowie die Deckschicht 12 umfasst, von beiden Seiten unter Einwirkung von Wärme und Druck (Temperatur von 120°C bis 220°C, vorzugsweise 170°C bis 200°C, besonders bevorzugt 180°C bis 190°C; Druck von 140 kN/cm² bis 450 kN/cm²), wie durch die Pfeile angedeutet, zusammen. Temperatur und Druck werden dabei nach bestimmten Temperatur/Druck-Profilen aufeinander abgestimmt. Unter dem Einfluss von Druck und Temperatur erweichen die polymeren Schichten 4 und 12 soweit, dass sie die Musterschicht 6 und die benachbart angeordnete Antennenstruktur ohne verbleibende Hohlräume vollständig umschließen. In dem Laminiervorgang verbinden sich die Schichten 4, 6, 8 und 12 des Schichtstapels, die vorzugsweise aus demselben Kunststoffmaterial bestehen, untrennbar miteinander. Es bildet sich ein Laminat 22 aus, das sowohl auf Vorder- als auch auf Rückseite eine völlig ebene Fläche aufweist. Die Schichtdicke des Laminats 22 liegt im Bereich von 700 bis 900 µm.

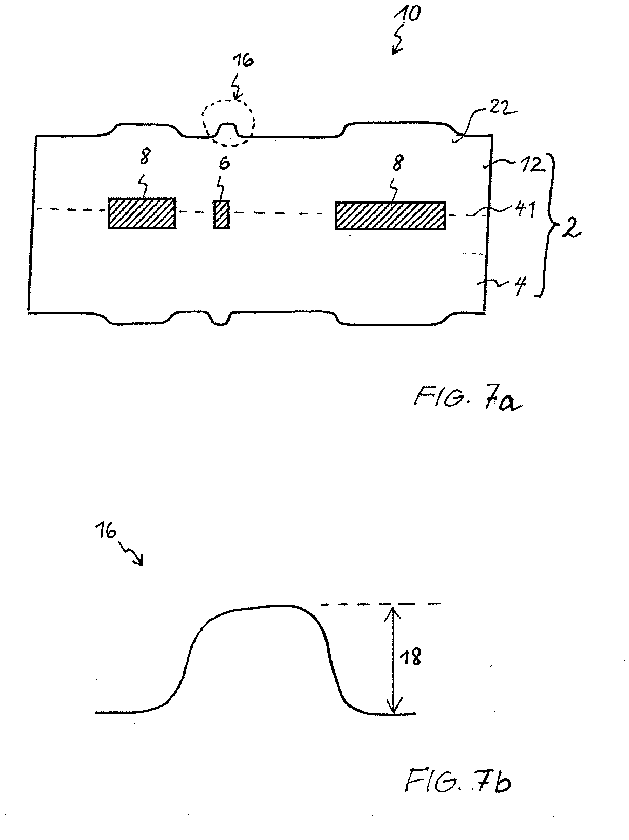

Figur 7a zeigt einen Schnitt durch ein erstes Ausführungsbeispiel eines erfindungsgemäßen Kartenkörpers 10. Nach dem Laminiervorgang, wie er in Figur 6 dargestellt ist, kühlt das entstandene Laminat 22 ab. Aufgrund der unterschiedlichen Wärmeausdehnungskoeffizienten der einzelnen Schichten im Schichtstapel 2 ziehen sich die Bereiche des Laminats 22, die, senkrecht zur Ebene des Schichtstapels 2 gesehen, im Bereich der Musterschicht 6 und der Antennenschicht 8 angeordnet sind, weniger stark zusammen als die verbleibenden Bereiche, in denen weder eine Musterschicht 6 noch eine Antennenstruktur 8 vorliegt.

Figur 7b zeigt eine vergrößerte Ansicht des Oberflächenreliefs im Bereich der Musterschicht 6. Darin ist die Modulationstiefe 18 angegeben, die im Bereich von 0,5 bis 50 µm, bevorzugt im Bereich von 1 bis 30 µm liegt.

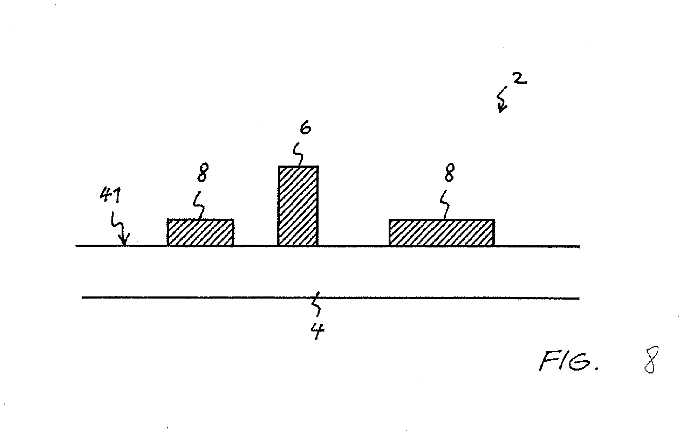

Figur 8 zeigt ein weiteres Ausführungsbeispiel einer Schichtstapels 2 bestehend aus einem Polymersubstrat 4 und einem auf einer ersten Seite 41 des Polymersubstrats 4 angeordneten Musterschicht 6 sowie einer auf derselben Seite 41 angeordneten Antennenstruktur 8. Im Gegensatz zu dem in Figur 4 dargestellten Schichtstapel 2 zeigt Figur 8 eine Musterschicht 6, deren Schichtdicke wesentlich größer ist als die Schichtdicke der benachbart angeordneten Antennenstruktur 8.

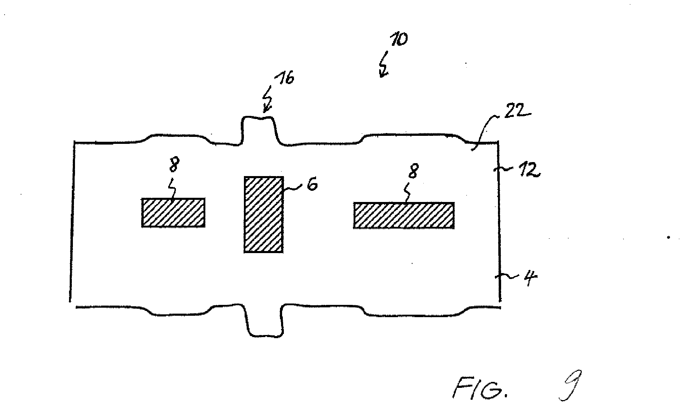

Figur 9 zeigt einen Schnitt durch einen Kartenkörper 10, der ausgehend von dem in Figur 8 dargestellten Schichtstapel 2 hergestellt wurde. Bezüglich dieses Herstellungsverfahrens wird auf die Figur 5 und Figur 6 sowie die entsprechende Beschreibung verwiesen. Aufgrund der wesentlich größeren Schichtdicke der Musterschicht 6 gegenüber den Antennenstrukturen 8 überragt das an der Oberfläche des Kartenkörpers 10 entstandene Oberflächenrelief zu beiden Seiten der Musterschicht 6, die Oberflächenstrukturen, die ausgehend von den wesentlich niedrigeren benachbarten Schichten 8 entstanden sind.

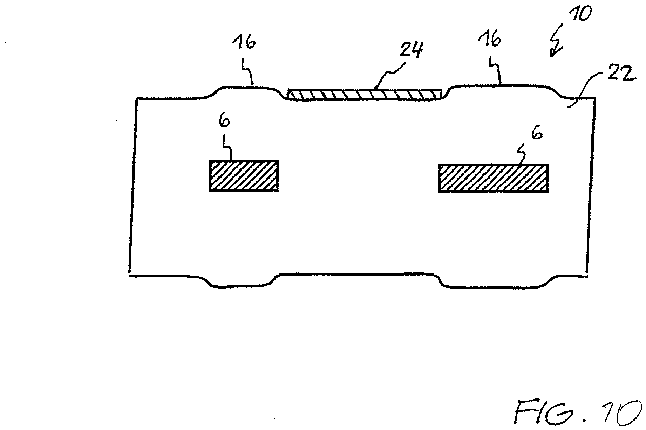

Figur 10 zeigt ein Ausführungsbeispiel eines erfindungsgemäßen Kartenkörpers 10, bei dem die an der Oberfläche des Kartenkörpers 10 angeordneten Oberflächenreliefs 16 als Schutzwulst für ein Oberflächenelement 24 dienen. Bei dem Oberflächenelement 24 kann es sich beispielsweise um einen Chip oder Chipmodul, ein aufgedrucktes OVI, ein OVD, welches beispielsweise als aufgeklebtes oder auflaminiertes Etikett oder als heiß- oder kaltgeprägtes Transferelement auf die Oberfläche des Kartenkörpers 10 aufgebracht wurde oder ein sonstiges optisches oder elektrisches Sicherheitsmerkmal handeln. Das Oberflächenelement 25 kann auch von einem auf der Oberfläche des Kartenkörpers 10 eingeschriebenen maschinenlesbaren Text oder einem OCR-B-Text oder einer anderen Kodierung oder taktil erkennbaren Elementen wie beispielsweise einer Blindenschrift gebildet werden, die mittels Hochprägen oder Intaglio-Druck auf- oder eingebracht wurden.

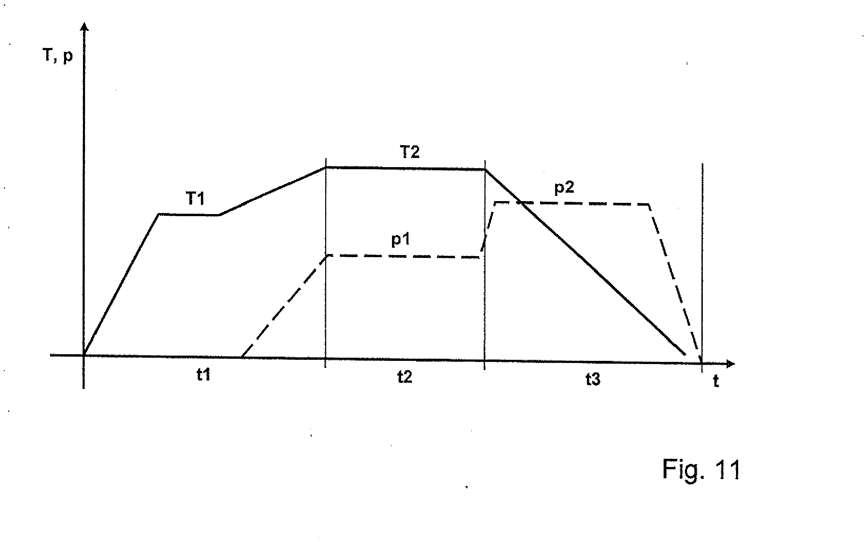

Fig. 11 zeigt ein kombiniertes Temperatur-Zeit- und Druck-Zeit-Diagramm, woraus der zeitliche Zusammenhang zwischen Temperatur und Druck während des Laminiervorgangs erkennbar ist.

Zuerst wird der Schichtstapel innerhalb einer Zeit t1 stufenweise erst auf eine Prozesstemperatur T1, beispielsweise 160°C, und anschließend auf eine Prozesstemperatur T2, beispielsweise 180°C bis 220°C erwärmt, je nach verwendetem Kunststoffmaterial, Anzahl der Schichten und Schichtendicken. Während des Erhöhens der Temperatur von T1 auf T2 wird der Pressdruck auf einen Prozessdruck p1 von etwa 140 kN/cm² bis etwa 220 kN/cm², ebenfalls abhängig von dem verwendeten Kunststoffmaterial, Anzahl der Schichten und Schichtendicken, erhöht. Während einer Zeit t2 wird der eingestellte Prozessdruck p1 und die Prozesstemperatur t2 gehalten. Anschließend beginnt das Abkühlen des Schichtstapels auf Raumtemperatur. Hierbei wird der Prozessdruck p1 auf einen höheren Prozessdruck p2 von etwa 350 kN/cm² bis etwa 450 kN/cm² angehoben, um während der Abkühlphase eine unkontrollierte Verformung des Schichtstapels, beispielsweise eine Wölbung oder ein "Schüsseln" zu verhindern.

### Bezugszeichenliste

- 2: Schichtstapel
- 4: Polymersubstrat
- 6: Musterschicht
- 8: Antennenstruktur
- 10: Kartenkörper
- 12: Deckschicht
- 14: Muster
- 16: Oberflächenrelief
- 18: Modulationstiefe
- 20: Pressfläche
- 22: Laminat
- 24: Oberflächenelement
- 41: Seite des Polymersubstrats 4

## Patentansprüche

1. Verfahren zur Herstellung eines Laminats (22) mit einem musterförmigen Oberflächenrelief (16), umfassend folgende Schritte:
Bereitstellen eines Polymersubstrats (4) mit einem ersten Wärmeausdehnungskoeffizienten und eines zweiten Materials mit einem zweiten Wärmeausdehnungskoeffizienten, wobei sich der erste und der zweite Wärmeausdehnungskoeffizient bei einer Temperatur von 20°C um mindestens 15 x 10⁻⁶ K⁻¹ unterscheiden;
Anordnen einer aus dem zweiten Material gebildeten Musterschicht (6) auf mindestens einer Seite des Polymersubstrats (4), so dass die Musterschicht (6) senkrecht zur Substratebene gesehen ein Muster (14) ausbildet; Pressen eines Schichtstapels (2) umfassend das Polymersubstrat (4) und die Musterschicht (6) in einem Laminier-Prozess bei einer Temperatur von 120°C bis 220°C zu einem Laminat (22), so dass die gegenüberliegenden Seiten des Schichtstapels (2) eben ausgebildet werden; und
Abkühlen des Laminats (22) auf eine Temperatur von 30°C bis 10°C, so dass sich aufgrund der unterschiedlichen Wärmeausdehnungskoeffizienten des Polymersubstrats (4) und der Musterschicht (6) an mindestens einer Oberfläche des Laminats (22) senkrecht zur Ebene des Laminats (22) gesehen das entsprechend dem Muster (14) geformte Oberflächenrelief (16) ausbildet.

2. Verfahren nach Anspruch 1,
**dadurch gekennzeichnet,**
**dass** das Verfahren weiter umfasst:
Anordnen einer Deckschicht (12) auf einer dem Polymersubstrat (4) abgewandten Seite der Musterschicht (6) vor dem Pressen des das Polymersubstrat (4), die Musterschicht (6) und die Deckschicht (12) umfassenden Schichtstapels (2), so dass sich das Oberflächenrelief (16) zumindest in einer durch die Deckschicht (12) gebildeten Oberfläche des Laminats (22) ausbildet.

3. Verfahren nach Anspruch 1 oder 2,
**dadurch gekennzeichnet,**
**dass** die Deckschicht (12) einen dritten Wärmeausdehnungskoeffizienten aufweist, wobei sich der zweite und der dritte Wärmeausdehnungskoeffizient bei einer Temperatur von 20°C um mindestens 15 x 10⁻⁶ K⁻¹ unterscheiden.

4. Verfahren nach Anspruch 2 oder 3,
**dadurch gekennzeichnet,**
**dass** die Deckschicht (12) aus PC besteht.

5. Verfahren nach einem der vorhergehenden Ansprüche,
**dadurch gekennzeichnet,**
**dass** das zweite Material einen anorganischen Stoff, vorzugsweise ein Metall, aufweist.

6. Verfahren nach einem der vorhergehenden Ansprüche,
**dadurch gekennzeichnet,**
**dass** das Polymersubstrat (4) eine Kunststofffolie mit einer Foliendicke von weniger als 300 µm, vorzugsweise im Bereich von 25 bis 150 µm, ist.

7. Verfahren nach einem der vorhergehenden Ansprüche,
**dadurch gekennzeichnet,**
**dass** die Musterschicht (6) eine Schichtdicke von mehr als 2 µm, vorzugsweise von mehr als 5 µm, aufweist.

8. Verfahren nach einem der vorhergehenden Ansprüche,
**dadurch gekennzeichnet,**
**dass** ein Element der Musterschicht (6), welches das Muster (14) ausbildet, mit einer Breite von mindestens 100 µm und benachbarte Elemente der Musterschicht (6), welche das Muster (14) ausbilden, mit einem Abstand von mindestens 300 µm auf dem Polymersubstrat (4) ausgebildet werden, jeweils in der Substratebene gemessen.

9. Verfahren nach einem der vorhergehenden Ansprüche,
**dadurch gekennzeichnet,**
**dass** das Muster (14) eine geometrische Form, ein Schriftzug, ein Symbol, ein Logo, ein Umriss oder eine Grafik ist.

10. Verfahren nach einem der vorhergehenden Ansprüche,
**dadurch gekennzeichnet,**
**dass** das Anordnen der Musterschicht (6) auf dem Polymersubstrat (4) umfasst:
Aufbringen einer elektrisch leitfähigen Seedlayer-Schicht auf dem Polymersubstrat (4), so dass die Seedlayer-Schicht senkrecht zur Substratebene gesehen das Muster (14) ausbildet; und
galvanisches Abscheiden einer metallischen Verstärkungsschicht auf der musterförmigen Seedlayer-Schicht, so dass die verstärkte Seedlayer-Schicht die Musterschicht (6) ausbildet.

11. Kartenkörper (10), gebildet aus einem Laminat (22) umfassend ein Polymersubstrat (4) mit einem ersten Wärmeausdehnungskoeffizienten und eine aus einem zweiten Material mit einem zweiten Wärmeausdehnungskoeffizienten gebildete Musterschicht (6), wobei sich der erste und der zweite Wärmeausdehnungskoeffizient bei einer Temperatur von 20°C um mindestens 15 x 10⁻⁶ K⁻¹ unterscheiden, wobei die Musterschicht (6) senkrecht zur Ebene des Kartenkörpers (10) gesehen ein Muster (14) ausbildet, und wobei der Kartenkörper (10) an mindestens einer Oberfläche des Kartenkörpers (10) ein Oberflächenrelief (16) aufweist, das senkrecht zur Ebene des Kartenkörpers (10) gesehen entsprechend dem Muster (14) der Musterschicht (6) geformt ist.

12. Kartenkörper (10) nach Anspruch 11,
**dadurch gekennzeichnet,**
**dass** das Oberflächenrelief (16), senkrecht zur Ebene des Kartenkörpers (10) gemessen, eine Modulationstiefe (18) von höchstens 30 µm, vorzugsweise im Bereich von 3 bis 30 µm, aufweist und/oder dass das Oberflächenrelief (16) senkrecht zur Ebene des Kartenkörpers (10) gemessen andere Oberflächenstrukturen des Kartenkörpers (10) überragt und/oder dass das Oberflächenrelief (16) visuell und/oder taktil wahrnehmbar ist und/oder dass das Oberflächenrelief (16) einen Schutzwulst zum Schutz eines an der Oberfläche des Kartenkörpers (10) angeordneten Elements (24) bildet.

13. Kartenkörper (10) nach einem der Ansprüche 11 bis 12,
**dadurch gekennzeichnet,**
**dass** der Kartenkörper (10) eine von der Musterschicht (6) beabstandet angeordnete Antennenstruktur (8) aufweist, wobei insbesondere senkrecht zur Ebene des Kartenkörpers (10) gemessen die Schichtdicke der Musterschicht (6) größer als die Schichtdicke der Antennenstruktur (8) ist.

14. Kartenkörper (10) nach einem der Ansprüche 11 bis 13,
**dadurch gekennzeichnet,**
**dass** das Oberflächenrelief (16) visuell und/oder taktil wahrnehmbar ist.

15. Kartenkörper (10) nach einem der Ansprüche 11 bis 14,
**dadurch gekennzeichnet,**
**dass** die Musterschicht (6) eine elektromagnetische Wirkung eines elektrischen Elements des Kartenkörpers (10), insbesondere einer Antennenstruktur (8), und/oder das Oberflächenrelief (16) eine optische Wirkung eines optischen Sicherheitselements des Kartenkörpers (10) beeinflusst.
